Europäisches Patentamt

European Patent Office

Office européen des brevets

(11) Publication number: **0 205 039 B1**

(12) **EUROPEAN PATENT SPECIFICATION**

(45) Date of publication of patent specification: **12.01.94**   (51) Int. Cl.⁵: **G11B 7/24**

(21) Application number: **86107253.6**

(22) Date of filing: **28.05.86**

Divisional application 91110241.6 filed on
28/05/86.

(54) **Optical storage device and method of manufacturing.**

(30) Priority: **10.06.85 US 742813**
**08.07.85 US 752741**
**29.07.85 US 760226**
**09.09.85 US 773710**
**15.10.85 US 787333**

(43) Date of publication of application:
**17.12.86 Bulletin 86/51**

(45) Publication of the grant of the patent:
**12.01.94 Bulletin 94/02**

(84) Designated Contracting States:
**DE FR GB NL**

(56) References cited:
**EP-A- 0 120 539**
**US-A- 3 778 785**
**US-A- 4 357 366**

**PROCEEDINGS OF SPIE-THE INTERNATION-**
**AL SOCIETY FOR OPTICAL ENGINEERING,**
**vol. 420, 6th - 10th June 1983, pages 200-204,**
**Washington, US; A. BELL et al.: "Optical stor-**
**age media"**

(73) Proprietor: **ENERGY CONVERSION DEVICES,**
**INC.**
**1675 West Maple Road**
**Troy Michigan 48084(US)**

(72) Inventor: **Strand, David**
**2091 Daintree**
**West Bloomfield, MI 48033(US)**
Inventor: **Ross, Randall**
**6363 Worlington**
**Birmingham, MI 48010(US)**
Inventor: **Vala, John**
**14053 Shadywood, Apartment H-116**
**Plymouth, MI 48170(US)**
Inventor: **DeNeufville, John P.**
**RD1 Indian Hollow Road**
**Mendham New Jersey 07945(US)**
Inventor: **Young, Rosa**
**2043 Red Maple**
**Troy Michigan 48084(US)**
Inventor: **Ovshinsky, Stanford R.**
**2700 Squirrel Road**
**Bloomfield Hills Michigan 48013(US)**

EP 0 205 039 B1

PATENT ABSTRACTS OF JAPAN, vol. 9, no. 9
(P-327)[1732], 16th January 1985 & JP-A-
59-157 855

(74) Representative: **Müller, Hans-Jürgen, Dipl.-Ing.
et al
Müller, Schupfner & Gauger
Maximilianstrasse 6
Postfach 10 11 61
D-80085 München (DE)**

## Description

The invention disclosed herein relates to optical data storage devices. In the devices data is stored in a material that is switchable between detectable states by the application of projected beam energy thereto.

Nonablative state changeable data storage systems, for example, optical data storage systems, record information in a state changeable material that is switchable between at least two detectable states by the application of projected beam energy thereto, for example, optical energy. Data may be stored reversibly or irreversibly. When optical energy is used to determine the state of the state changeable material, the measured property may be the reflectivity. Reflectivity is a function of wavelength, material thickness, and index of refraction, where the index of refraction is a function of the state of the material.

A data storage device has a structure with the data storage material supported by a substrate and encapsulated in encapsulants. In the case of optical data storage devices the encapsulants include, for example, anti-ablation materials and layers, thermal insulation materials and layers, anti-reflection materials and layers, reflective layers, and chemical isolation layers. Moreover, various layers may perform more than one of these functions. For example, anti-reflection layers may also be anti-ablation layers and thermal insulating layers. The thicknesses of the layers, including the layer of state changeable data storage material, are optimized to minimize the energy necessary for state change and maximize the high contrast ratio, high carrier to noise ratio, and high stability of state changeable data storage materials.

The state changeable material is a material capable of being reversibly or irreversibly switched from one detectable state to another detectable state or states by the application of projected beam energy thereto. State changeable materials are such that the detectable states may differ in their morphology, surface topography, relative degree of order, relative degree of disorder, electrical properties, optical properties including indices of refraction and reflectivity, or combinations of one or more of these properties. The state of state changeable material is detectable by the electrical conductivity, electrical resistivity, optical transmissivity, optical absorption, optical refraction, optical reflectivity, or combinations thereof.

Formation of the data storage device includes deposition of the individual layers, for example by evaporative deposition, chemical vapor deposition, and/or plasma deposition. As used herein plasma deposition includes sputtering, glow discharge, and plasma assisted chemical vapor deposition.

Tellurium based materials have been utilized as state changeable materials for data storage where the state change is a structural change evidenced by a change in reflectivity. This effect is described, for example, in J. Feinleib, J. deNeufville, S.C. Moss, and S.R. Ovshinsky, "Rapid Reversible Light-Induced Crystallization of Amorphous Semiconductors," Appl. Phys. Lett., Vol. 18(6), pages 254-257 (March 15, 1971), and in U.S. Patent 3,530,441 to S.R. Ovshinsky for Method and Apparatus For Storing And Retrieving Of Information. A recent description of tellurium-germanium-tin systems, without oxygen, is in M. Chen, K.A. Rubin, V. Marrello, U.G. Gerber, and V.B. Jipson, "Reversibility And Stability of Tellurium Alloys for Optical Data Storage," Appl. Phys. Lett., Vol. 46(8), pages 734-736 (April 15, 1985). A recent description of tellurium-germanium-tin systems with oxygen is in M. Takanaga, N. Yamada, S. Ohara, K. Nishiciuchi, M. Nagashima, T. Kashibara, S. Nakamura, and T. Yamashita, "New Optical Erasable Medium Using Tellurium Suboxide Thin Film," Proceedings, SPIE Conference on Optical Data Storage, Arlington, VA, 1983, pages 173-177.

Tellurium based state changeable materials, in general, are single or multi-phased systems (1) where the ordering phenomena include a nucleation and growth process (including both or either homogeneous and heterogeneous nucleations) to convert a system of disordered materials to a system of ordered and disordered materials, and (2) where the vitrification phenomenon includes melting and rapid quenching of the phase changeable material to transform a system of disordered and ordered materials to a system of largely disordered materials. The above phase changes and separations occur over relatively small distances, with intimate interlocking of the phases and gross structural discrimination, and are highly sensitive to local variations in stoicheiometry.

One major limitation of optical data storage devices is lack of reproducability of the contrast from one production run to the next. The contrast is the difference between the reflectivity of the optical data storage material in one state and its reflectivity in another state. Reflectivity is affected by interference phenomena. The reflectivity of the optical data storage medium is dependent on the thickness of the film of the optical data storage medium, the wavelength of the projected beam optical energy used for interrogation, and the index of refraction of the optical data storage medium.

The interrogation means is typically a monochromatic light source. The wave length of this monochromatic light source defines the wave length for interference phenomena.

The index of refraction can be controlled by control of the chemical composition of the medium. This includes control of the composition of, for example, sputtering targets, evaporation sources, and chemical vapor deposition gases.

Thickness is a more difficult variable than composition to control. Thickness of deposited thin films have heretofore been controlled by, for example, simultaneously coating the substrate to be coated and an oscillator. The oscillator frequency is a indirect function of coating thickness. The difference in oscillator frequency from the beginning of a deposition run to the end of the deposition run can be correlated with the deposition thickness. The deposition thickness then determines the reflectivity of the deposition for a given refractive index.

Thickness may also be controlled by measuring the optical thickness or optical density of the deposit. For example, U.S. Patent 3,773,548 to Baker, et al for METHOD OF MONITORING THE RATE OF DEPOSITING A COATING SOLELY BY ITS OPTICAL PROPERTIES describes a process where coating thickness is controlled by measuring the optical density of an evaporated coating on a continuously advancing substrate. In Baker the optical density of a point is measured only once. This measurement is used to control the deposition rate at a prior deposition station.

Thickness may also be measured by determining the interference fringes of the coating, as described, for example, by Alvin Goodman "Optical Interference Method for the Approximate Determination of Refractive Index and Thickness of a Transparent Layer", Applied Optics, Vol 17 (No.17), pages 2779-2787 (September 1978), and R.D. Pierce and W.B. Venard, "Thickness Measurements of Films On Transparent Substrates By Photoelectric Detection of Interference Fringes", Rev. Sc. Instrum., Vol. 45 (No. 1), pages 14-15 (January 1974).

Another problem heretofore associated with optical data storage devices is concentration gradients with respect to deposition depth. This is not altogether remedied by "initializing." That is, while the memory material must be initialized as described, for example, in the commonly assigned copending U.S. Application Serial No. 667,294, filed November 1, 1984, of Rosa Young and Napoleon Formigoni for Method Of Forming An Optical Data Storage Device, the vertical gradients may not be eliminated thereby.

Present systems are multiphase systems where the ordering phenomena includes a plurality of solid state reactions and/or interactions to convert a system of predominantly disordered materials to a system of ordered and disordered materials, and where the vitrification phenomena includes solid-solid, solid-liquid, and liquid-liquid reactions and/or interactions, including reactions and/or interactions at phase interfaces, whereby to convert a system of disordered and ordered components to a system of predominantly disordered components. The above phase separations occur over relatively small distances with intimate interlocking of the phases and gross structural discrimination.

Exemplary of this reacting system within the film of phase change material is the reaction of the prior art disordered germanium-tellurium-oxygen systems under "crystallizing" conditions to form germanium oxides, including suboxides and non-stoichiometric oxides, tellurium, and different germanium-tellurium compounds, where the tellurium is crystalline.

Another major limitation of using state change materials for optical data storage is the trade off between thermal stability and the crystallization rate. Another limitation is the cycle history dependency of the contrast ratio as interfacial interactions occur between phase changeable materials. A more subtle limitation is the observed increase in the "erased" signal to noise ratio with respect to time in the written state prior to erasure. This is because reflectivity is also a function of crystalline orientation. The "erased" signal to noise ratio increases as certain preferred nucleations initiate and/or nucleation site rearrangements occur during room temperature storage.

A further limitation of using state change materials for optical data storage is the sensitivity of the optical data storage medium to local changes in stoicheiometry. For example, where the encapsulating layer in contact with the chalcogen state changeable memory material is germanium oxide, the germanium oxide must be substantially stoicheiometry $GeO_2$ in order to avoid either the diffusion of germanium into the state changeable chalcogenide data storage medium or the diffusion of oxygen out of the state changeable chalcogen data storage medium into the $GeO_x$. However, substantially stoicheiometry germanium dioxide, while useful in layered optical data storage structures is water permeable.

Another limitation to the rate of data storage is the slow ordering or erasing time. One aspect of the slow ordering time is the sensitivity of the ordering time to variables such as the manufacturing history, and the service life history, i.e., the order-disorder cycle history. For example, in order to attain high ordering rates, e.g., on the order of 0.1 to 10 microseconds, it is sometimes necessary to age the device after deposition of the chalcogenide state change layer, but prior to the deposition of subsequent layer, e.g., barrier and encapsulant layers. Another aspect of this problem is that switching or ordering time can increase with increasing order-disorder cycles. This increase in the switching or ordering time with order-disorder cycles is identified with increasing disorder in the ordered material or portions thereof.

A data storage device as explained in the opening part of claim 1 is described EP-A-0 120 539. The information is stored by burning holes into the data storage medium, that means into the recording layer.

Data storage medium comprising a chalcogenide record layer and a cross linking agent is described in Proceedings of SPIE, volume 420, pages 200-204.

Furthermore, US-A-3 778 785 describes a semi-conductor material capable of changing from the crystalline to the amorphous state by the applification of a high speed pulsed laser beam. The semi-conductor material is for instance $Te_{80} Ge_{15} As_5$.

Finally, it is described in US-A-4 357 366 to compose an optical memory disk by a thin tellurium film onto a base plate and forming at least two layers each of a different oxide of tellurium on the surface of said tellurium film.

The objective of the present invention is to obtain an optimum "erase" signal to noise ratio invariance with respect to "written" storage time and to obtain an optimum contrast ratio with respect to cycle history. The "storage time" is the time spent in a prior "written" state. "Cycle history" includes either the number of cycles or the time in each state or both. Furthermore, it is an objective of the present invention to increase the erase velocity e.g. on the order to less than 1 $\mu$s.

The invention is characterized in claim 1 and preferred embodiments are claimed in sub-claims.

According to the invention the chalcogenide is reversibly switchable and includes about 1-20 atomic percent of a switching modulator being a transition metal and/or a halogen.

Switching is for example by optical energy, particle beam energy or the like.

The reversibly switchable chalcogenide comprises e.g. tellurium which is present with a cross linking agent or agents so that the material may be reversibly switchable between a first system of an amorphous, first tellurium and cross linking agent composition or compositions and a second system of a crystalline tellurium and an amorphous, second tellurium and cross linking agent composition or compositions. The crystalline tellurium and the disordered second tellurium and cross linking agent compositions effectively phase separate upon crystallization of the amorphous, first tellurium-cross linking agent composition. The difference between the optical properties of the two states is sufficient to provide discrimination therebetween.

The thickness of either or both of the dielectric layers may be controlled. In the case of the bottom dielectric layer, the reflectivity of the deposit on a reference sample, which may contain an already deposited layer of state changeable material, is monitored during deposition. In that way, deposition of the bottom dielectric layer may be controlled by monitoring its reflectivity, for example, under actual use conditions, as next to a state changeable layer.

The data storage medium may be manufactured by depositing the materials to form a substantially uniform deposit thereof. The deposit may be from about 10 nm 150nm or more.

The problem of gradients in films formed by evaporative deposition is obviated by the method of the present invention. These gradients may be controlled and even eliminated by providing within a vacuum deposition means (1) a substantially non-convecting, multicomponent, chalcogenide, first source, and (2) a chalcogen second source. The first source is preferably a substantially single phase source. It may be a solid source or a liquid source. Optionally, an oxygen containing third source may be present. According to the method of the invention, the substantially non-convecting, multicomponent, single phase, chalcogenide material is converted to a non-condensed state, e.g., a gas, with substantial source/non-condensed state equivalence. The material is then deposited on the substrate with substantial non-condensed state/deposit equivalence. The resulting memory material is reversibly switchable from one detectable state to another.

The switching modulator forms effective nucleation sites in the written state, to provide a large volume fraction of small crystallites and random crystallite orientation in the erased state. This serves to enhance the crystallization rate and permit discrimination between relatively ordered and relatively disordered states, to provide a relatively invariant "erased" signal to noise ratio with respect to time in the previous "written" state.

The switching modulator is believed to work by providing nucleation sites, e.g., by introducing impurity states or bands into the chalcogenide phase electronic structure, thereby forming electrically active centers in the chalcogenide phase, which localized electrically active sites may act as nucleation sites. Alternatively, or additionally, the switching modulator may act as a crystal growth promoter, terminating disordered chalcogenide chains.

The switching modulator is a transition metal or a halogen. Preferred are the transition metals of the left column of Group VIII, Ni, Pd, Pt, and mixtures thereof, with Ni preferred. The switching modulator is present in the composition at a concentration of from about 0.1 to 20 atomic percent, and preferably from about 1 to 10 atomic percent. Additionally, a halogen, as F, Cl, Br, I, or mixtures thereof may be present, e.g. with the transition metal, as a switching modulator. Iodine is the preferred halogen switching modulator.

The data storage medium may be formed by depositing the materials to form a substantially uniform deposit thereof. The deposit may be from about 50 to about 150nm thick. The deposit may be formed as a single layer, or as multiple layers, e.g., of chalcogenide about 20 to 30 nm thick, and of dielectric, as $GeO_2$, $SiO_2$, $Al_2O_3$ or the like, about 5 to 10nm thick.

The data storage medium may be deposited by various means including sputtering, such as co-sputtering, reactive sputtering, reactive co-sputtering, evaporating, or co-evaporating.

After deposition, a series of vitrification or crystallization and vitrification steps may be carried out whereby to effect "initialization" to a uniform "erased" state.

According to a further exemplification the dielectric film encapsulating the data storage medium is a compositionally graded or layered dielectric, generally an oxide. That is, the film is compositionally graded or layered in oxygen content with respect to distance from the chalcogen data storage medium. By compositionally graded oxides are meant both monotonically and step-wise graded, i.e., layered, oxides. The oxide in contact with the chalcogen storage medium is a substantially stoicheiometry dielectric, e.g., germanium dioxide, $GeO_2$. The dielectric, e.g., germanium oxide, remote from the chalcogenide data storage medium is a substantially non-stoichiometric dielectric, e.g. germanium suboxide.

The dielectric barrier layer, for example, germanium oxide and suboxide, may serve as a thermal isolation layer, an optical coupling layer, and a chemical barrier, especially a moisture barrier. While the dielectric may be silicon nitride, silicon oxide, aluminum oxide, or mixtures thereof, germanium oxide is preferred. For example, germanium suboxide, with stoicheiometry, $GeO_x$, x being from about 1.5 to 1.95 is a moisture barrier, preventing the diffusion of water into the chalcogenide. However, germanium suboxide is associated with the diffusion of germanium into the chalcogenide data storage medium and/or the diffusion of oxygen out of the chalcogenide data storage medium. While the problem of diffusion between the chalcogenide data storage medium and the dielectric layer is obviated by the use of substantially stoicheiometry $GeO_2$, substantially stoicheiometry $GeO_2$ is an ineffective moisture barrier, being permeable to moisture. The moisture diffusing through the substantially stoicheiometry $GeO_2$ permanently damages the chalcogen data storage medium. These problems are obviated where the germanium oxide encapsulating layer or barrier layer is substantially stoicheiometry germanium dioxide in proximity to the chalcogen data storage medium and is a non-stoichiometric germanium sub-oxide remote from the data storage medium.

According to a still further exemplification of the invention herein contemplated there is provided a data storage device having a chalcogen data storage medium, with at least one morphology enhancing component in contact with the chalcogenide data storage medium, e.g., embedded in the chalcogen data storage medium or deposited between and in contact with chalcogen data storage medium and one of the dielectric layers. As used herein, the term "component" includes a separate continuous layer, a separate discontinuous layer, or discrete islands of morphology enhancing material dispersed within another layer.

It is believed that the morphology enhancing component increases the rate of the ordering phenomenon, e.g., crystallization, by providing seeds or nucleation sites, and controls the crystal growth specifically controlling the size, orientation, volume fraction or growth rate thereof. Thus, it is believed that the component provides consistent, and even preferred orientations, and reduces the time for switching from the less ordered detectable state to the more ordered detectable state.

Moreover, it is believed that in one exemplification of the invention the morphology enhancing component reduces the cycle history dependent change in order of the ordered material by providing seeds or nucleation sites that are themselves not subject to cycling or state change.

According to one exemplification the morphology enhancing component is a chalcogen layer. When the morphology enhancing layer is a chalcogen layer, it need only persist for one cycle, helping manufacture, eliminating the need for aging, and helping initialization. The chalcogen may be the same chalcogen as the chalcogen of the chalcogenide layer, i.e., a tellurium layer in contact with a state changeable telluride layer. Alternatively it may be a different chalcogen, as a selenium-tellurium, or tellurium-sulfur layer in contact with a telluride state change layer. Alternatively the layer may have an oxygen content higher than that of the state changeable layer. For example the state changeable layer may be $Te_{79}Sn_6Ge_5O_{10}$ having a crystallization temperature of about 90°C, and the morphology enhancing layer may be a 3nm thick layer of $Te_{59}Sn_6Ge_5O_{30}$. It is believed that the chalcogen layer functions by providing seeds or nucleation sites, e.g., of microcrystalline chalcogen, in contact with the disordered chalcogenide layer.

According to an alternative exemplification the morphology enhancing component is a layer, or deposit, or embedded particles of a high melting metal, e.g., tungsten, molybdenum, iron, cobalt, nickel, platinum, titanium, zirconium, hafnium, niobium, tantalum, high melting compounds thereof, including chalcogenides thereof, or mixtures thereof. Other high melting materials, including chalcogenides, may also be utilized. It is believed that the layer or thin film of morphology enhancing material provides a site for epitaxial growth or heterogeneous nucleation of phase change chalcogenide material, e.g., crystallization of the phase change chalcogen material. It is further believed that nucleation may occur along planes with hexagonal or trigonal symmetry, such as the (001) planes of hexagonal close packed materials or the (111) planes of cubic close packed or body center cubic materials constituting the thin film layer. When a layer is referred to with respect to crystallographic features, it is also understood that inclusions within the phase change material are encompassed thereby.

The invention may be particularly understood by reference to the drawings appended hereto.

Figure 1 is a partial cut away isometric view, not to scale, with exaggerated latitudinal dimensions and vertical scale, of an optical data storage device.

Figure 1A is a detailed section of the part of the optical data storage device of Figure 1 showing the relationship of the various layers thereof.

Figure 2A through 2C show the reflectivities, both "as deposited" and "crystallized", for various thicknesses of the telluride optical data storage medium film.

Figure 3 is a representation of the contrast ratio (R crystalline - R amorphous)/R crystalline + R amorphous) using an 830 nanometer laser, as a function of thickness.

Figure 4 is a representation of the reflectivity using an 830 nanometer laser in the as deposited state of the chalcogenide layer as a function of thickness.

Figure 5 is a schematic view of one exemplification of a deposition system of the invention.

Figure 6 is a schematic view of an alternative exemplification of a deposition system of the invention.

Figure 7 is a schematic view of a vacuum deposition system useful in carrying out the method of the invention.

Figures 8A and 8B are plots of a measure of erased state chalcogenide crystallite orientation as functions of (1) nickel or oxygen content, and (2) written state storage time.

Figures 9, 10 and 11 are plots of written and erased state relative reflectivities and switching times versus number of cycles at various Ni contents for $Te_{88}Ge_2Sn_5Ni_5$ $Te_{88}Ge_5Sn_5Ni_2$, and $Te_{89}Ge_2Sn_9$.

Figures 12, 13 and 14 are plots of reflectivity versus temperature for $Te_{88}Ge_2Sn_5$, $Te_{88}Ge_5Sn_5Ni_2$, and $Te_{89}Ge_2Sn_9$.

Figure 15 is a graphical representation of germanium oxide stoicheiometry as a function of distance from the chalcogen data storage medium layer.

According to the invention described herein, there is provided a method of and apparatus for manufacturing a projected beam data storage device having a data storage medium switchable between detectable states by the application of projected beam energy thereto.

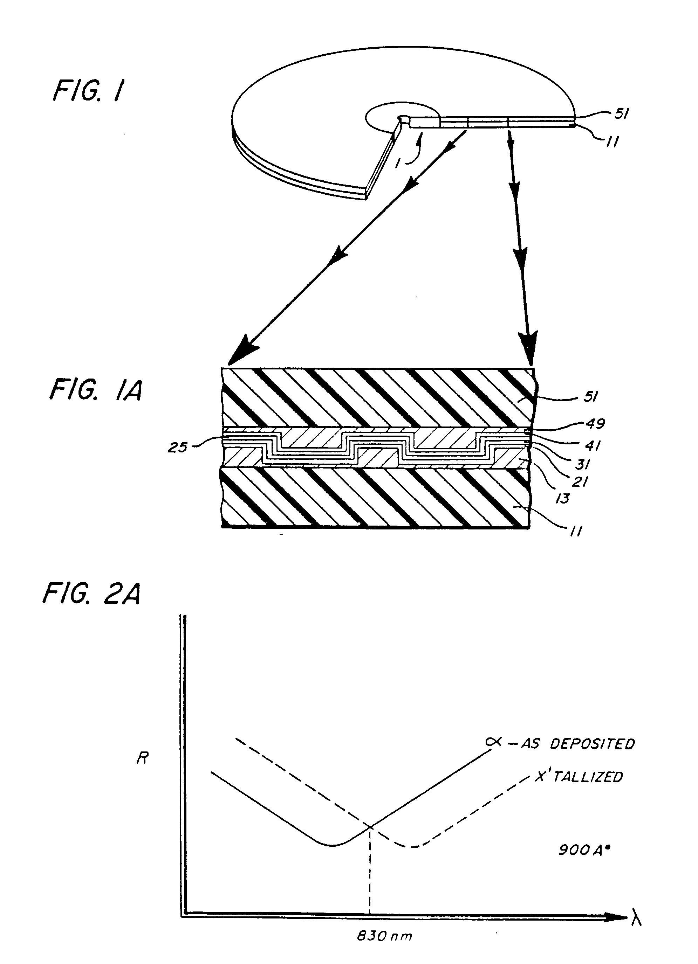

Figures 1 and 1A show a projected beam data storage device 1 having a substrate, for example a plastic substrate 11, a first encapsulating dielectric layer 21, for example a first germanium oxide encapsulating layer, a chalcogen data storage medium layer 31, a second dielectric layer 41, e.g., a second germanium oxide layer 41, and a second substrate, e.g., plastic substrate 51.

Figure 2A shows a section of the data storage device 1 of Figure 1 in greater detail. As there shown, the substrate 11 is a polymeric sheet, for example a polymethyl methacrylate sheet. The substrate 11 is an optically invariant, optically isotropic, transparent sheet having a thickness such as to prevent optical interference with the projected beam data storage medium from greasy or oily films, or inclusions of dirt, dust, fingerprints, or foreign material. The preferred thickness ranges from about 1 mm to about 1.5 mm.

Atop the substrate sheet 11 is a second sheet 13, e.g., a photoinitiated, polymerized acrylic sheet. Polymerized, molded, or cast into the photoinitiated, polymerized acrylic sheet 13 may be grooves. When grooves are present they may have a thickness from about 50 to 100nm. The photoinitiated, polymerized acrylic sheet 13 has a thickness of from about 30 to about 200 $\mu$m and preferably from about 50 to about 100 $\mu$m.

Deposited atop the photo-polymerized sheet 13 is a dielectric barrier layer 21. The dielectric barrier layer 21, for example, of germanium oxide, is from about 50 to 200 nm thick. The dielectric barrier layer 21 has one or more functions. It serves to prevent oxidizing agents from getting to the chalcogen active layer 31 and prevents the plastic substrate from deforming due to local heating of the chalcogenide layer 31, e.g., during recording or erasing. The barrier layer 21 also serves as an anti-reflective coating, increasing the optical sensitivity of the chalcogen active layer 31.

Other dielectrics may provide the encapsulating layers 21, 41. For example, the encapsulating layers may be silicon nitride, layered or graded to avoid diffusion of silicon into the chalcogenide layer 31. Alternatively, the encapsulating dielectric layers 21, 41 may be silica, alumina, or other dielectric.

The chalcogenide data storage medium 31 has a thickness of from about 10 to about 150 nm. The exact thickness of the chalcogenide data storage medium is a function of the wavelength of the interrogating laser and the indices of refraction of the states of the chalcogenide.

Atop the chalcogenide layer 31 and in contact with the opposite surface thereof is a second dielectric layer 41, e.g., a germanium oxide layer. The second dielectric layer 41 may, but need not be of equal thickness as the first layer 21. A second photopolymer layer 49 and a second substrate layer 51 are in contact with the opposite surface of the encapsulant layer 41.

The polyacrylate layers 13, 49, are cast or molded in place. These layers 13, 49 can be photo-polymerized in place, e.g., by the application of ultra-violet light. The barrier layers 21, 41, are deposited, by evaporation, for example, of germanium and germanium oxide materials, or by sputtering, including reactive sputtering where the oxygen content of the reactive gas used in reactive sputtering is controlled. The chalcogenide film 31 may be prepared by evaporation, or by sputtering, or by chemical vapor deposition.

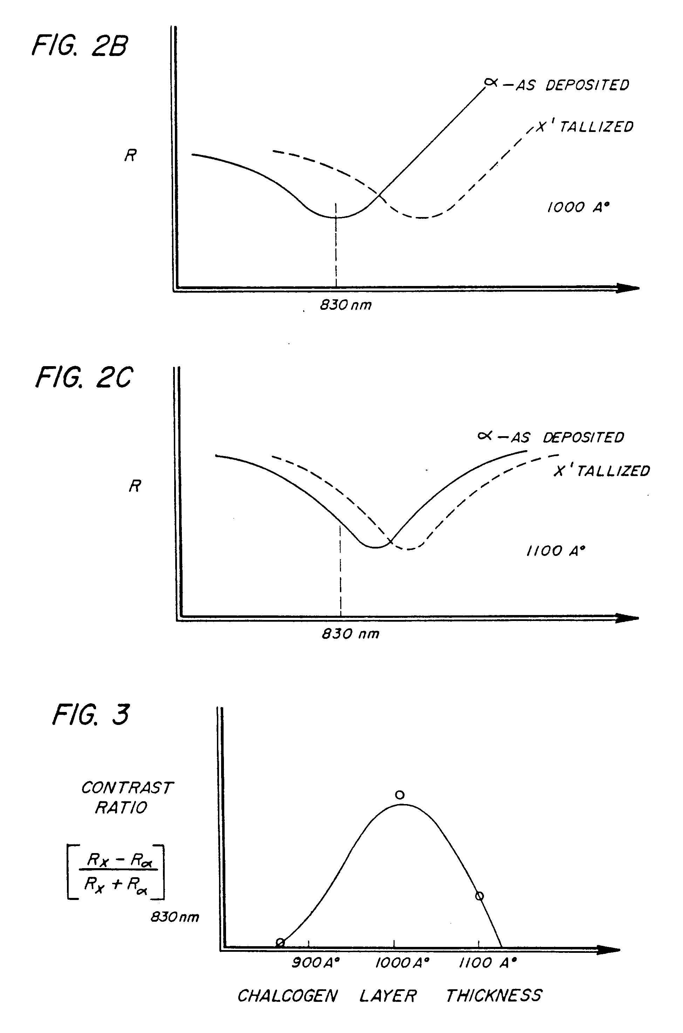

Figures 2A, 2B, and 2C illustrate the effects of the thickness of the deposited coating on the individual reflectivities, and therefore, on the contrast ratio.

Figure 2A shows the relative reflectivity in an arbitrarily chosen 90 nm thick layer, versus wavelength of the laser beam for both the disordered, as deposited, material and the crystallized material. At a deposit thickness of 90 nm, the as deposited material and the crystallized material have substantially the same reflectivity.

Figure 2B shows the reflectivity versus wavelength for a 100 nm thick deposit. At 830 nm the reflectivity of the as deposited material is substantially less than the reflectivity of the crystallized material.

Figure 2C shows the reflectivity versus wavelength for an 110 nm thick layer. At 110 nm the reflectivity curves have shifted even further so that they are substantially parallel and may even be superimposed on each other and the reflectivities for 830 nanometer optical energy are again substantially equal.

Figure 3 shows the contrast ratio, ($R_{crystalline}$-$R_{amphorous}$/$R_{crystalline}$ + $R_{amorphous}$) with an 830 nanometer laser beam as a function of chalcogenide layer thickness. As there shown, the contrast ratio reaches a relative peak at approximately 100 nm thickness, dropping off rather sharply towards both 90 nm and 110 nm.

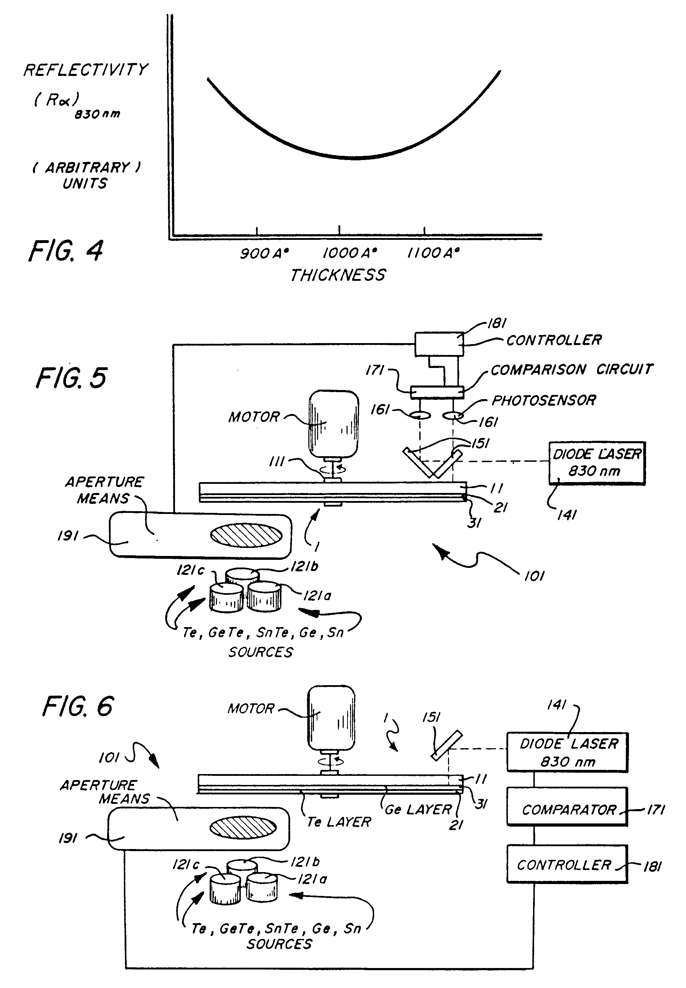

Figure 4 shows the reflectivity of the as deposited material in arbitrary units versus thickness for an 830 nanometer laser light. The reflectivity of the as deposited film reaches a relative minimum at about 100 nm.

According to one embodiment the invention herein contemplated, the thickness is either repeatedly or substantially continuously monitored while depositing the material precursor, e.g. optical data storage medium material precursor, such as chalcogens like tellurium, with alloying elements from one or more sources, onto the subjacent layer to form a film of the condensed material, e.g., optical data storage medium. This provides periodic measurement of an optical property of a selected region of the film. The optical property may be the ultimate optical property, i.e., reflectivity. If the optical property is reflectivity, deposition is controlled by continuously measuring the reflectivity of the deposited material, e.g. optical data storage medium, whereby to periodically measure the reflectivity of a particular region of interest. The optical property, e.g. reflectivity of a region, is representative of the same optical properties of the entire deposit.

The measurement of the optical property, e.g., reflectivity, is continued until a predetermined value is attained, for example, a minimum or relative minimum as shown in Figure 4 corresponding to a thickness of about 100 nm. When the predetermined value is attained, e.g., with respect to time delays of the measurement and deposition systems, the deposition of the optical data storage material is terminated.

The periodic motion provided to the optical data storage device substrate with respect to the deposition source is such that the regions of the device are periodically instantaneously preferentially exposed to the source of material precursor, e.g. optical data storage medium material precursor, and the entire surface of the optical data storage device is substantially uniformly exposed to the source of material precursor, e.g., optical data storage medium material precursor, over an extended period of time with respect to the time period of the periodic motion. The deposition per rotation is less than about one percent of the total thickness of the ultimate film of the material, e.g., optical data storage medium. The optical sensor may substantially continuously scan an entire track of a rotating or reciprocating optical data storage device in such a way that the track is substantially continuously monitored and a particular region thereof is instantaneously monitored substantially periodically. By this expedient, the thickness of the deposit is substantially continuously profiled with respect to time.

When the thickness of the deposit reaches a value corresponding to the predetermined reflectivity of the as deposited material, the deposition is terminated, for example, by closing an aperture of an evaporating system, by discontinuing the energy to a sputtering system, or by discontinuing the energy or flow of reactants or both through a chemical vapor deposition system.

Systems for carrying out the deposition method of the invention are shown in Figures 5 and 6. As there shown, there is provided a system 101 for manufacturing an optical data storage device 1 as described above. The system 101 includes means 111, for example, rotating means 111 for supporting the optical

8

date storage device 1. Source means 121a, 121b and 121c are provided for controllably providing material precursor, e.g., optical data storage medium material precursor, for subsequent deposit in a condensed state on the optical data storage device 1. The source means 121a, 121b and 121c may be individual or multiple sputtering targets, individual or multiple heated crucibles, or individual or multiple sources of chemical vapor deposition reagents.

The system further includes means 131 for providing periodic motion to the optical data storage device 1 with respect to the source means 121a, 121b and 121c. While Figures 5 and 6 show this as being rotating means 131 for rotating the source means, the means for providing relative motion may include means for providing alternative modes of periodic motion, such as reciprocating or rotating means.

The system further includes means for substantially continuously measuring an optical property of the condensed deposit of the material, e.g., optical data storage medium material, on the optical data storage device 1. In Figure 5, this is accomplished by a diode laser 141 having a characteristic wavelength of 830 nanometers. The diode laser 141 provides light to an optical system including a beam splitter 151. Light reflected from the optical data storage device 1 goes to a photosensor 161 and a comparator circuit 171. When a predetermined value of reflectivity is attained, a controller 181 closes aperture means 191 over the source means 121a, 121b, 121c, of optical data storage medium material precursor.

An alternative system shown in Figure 6 measures reflectivity through the substrate and barrier layer to the chalcogenide layer. The system 101 shown in Figure 6 further includes beam splitter means 151, photosensor means 161, comparison circuit means 171, and controller means 181.

According to another embodiment of the invention herein contemplated, there is provided a method of manufacturing an optical data storage device. The optical data storage device has an optical data storage medium layer formed of a thin film, supported by a substrate. The optical data storage medium is switchable between optically detectable states by the application projected beam energy thereto.

According to the invention herein contemplated, the medium precursor is deposited from a source or sources thereof. The sources may be vapor sources, for example, sputtering, evaporation, or chemical vapor deposition. In the method of depositing the material, e.g., optical data storage medium, on the device, a periodic motion is applied to the device with respect to the source. For example, the source may be a mobile source, or the source may be a stationary source with a moveable aperture or movable distributor thereon, or the source may be a stationary source and the device itself may move with respect to the source. The movement may be rotary or reciprocatory. For example, periodic motion may be applied to the device substrate with respect to the source such that the regions of the device are periodically instantaneously preferentially exposed to source of material precursor, e.g., optical data storage medium material precursor. In this way, the entire surface of the device is substantially uniformly exposed to the source of material precursor, e.g. optical storage medium material precursor, over an extended period of time with respect to the periodic motion.

The film deposited during one period or rotation is less than about one percent of the total thickness of the ultimate deposited film.

The data storage medium is deposited on the device to form a film of material, e.g., optical data storage medium, thereon. According to the method of the invention, an optical property of the film of deposited material is substantially continuously measured. This results in periodically measuring the optical property of the region of the deposit. The measured optical property is compared with a predetermined value of the optical property and the deposition of the material is terminated when the measured value of the optical property substantially equals a predetermined value thereof.

Most commonly, the optically detectable states of the optical data storage medium are evidenced by the reflectivities thereof, and it is the reflectivity that is measured during deposition.

An optical data storage device can be produced as follows: The device has a substrate and a vapor deposited layer of state changeable optical data storage medium thereon. The deposition system includes means for supporting the optical data storage device and source means, which may include one or more individual sources. The source means controllably provide material precursor, e.g., optical data storage medium material precursor, for deposit in a condensed state on the optical data storage device. The system further includes means for providing periodic motion to the optical data storage device with respect to the source means. For example, the source may be a moving source. Alternatively, the source may be a stationary source with a moving aperture. Alternatively, and preferably, the data storage device moves, for example, with rotational or reciprocating motion.

The system further includes means for substantially continuously: (1) measuring an optical property of the film, i.e., condensed deposit of material on the optical data storage device, (2) comparing the measured optical property to a predetermined value thereof, and (3) controlling the source means with respect thereto, e.g., terminating deposition when the measured value substantially equals the predetermined value.

The means for providing the periodic motion to the optical data storage device with respect to the source means is the rotational means. The rotational means provide rotational motion to the optical data storage device with respect to the source means. Thus, the regions of the device are periodically instantaneously preferentially exposed to the source means and the entire surface of the device is substantially uniformly exposed to the source means over an extended time with respect to the periodic motion. The period of the periodic motion is set or regulated with respect to the deposition rate such that the deposition of optical data storage medium per period is less than about one percent of the total thickness of the ultimate film of optical data storage medium.

The source means may be evaporation means, sputtering means, or chemical vapor deposition means. The optical property measured is preferably the reflectivity. The means for measuring the reflectivity include laser means. The material being deposited may be optical data storage medium. Alternatively, it may be dielectric encapsulating material.

According to a still further exemplification of the invention herein contemplated, there is provided a method of forming a layer of memory material for the projected beam data storage device. The method comprises depositing a multi-component, phase changeable, chalcogenide material on a substrate to form a deposit thereof, for example, a substantially uniform deposit. The reagents are provided in a vacuum deposition means. The reagents include a substantially non-convecting, multi-component, chalcogenide first source. The first source may be a solid or a liquid, e.g., a substantially non-convecting liquid. The first source is a substantially single phase material. Other reagents that may be present may be a chalcogen source or reagent, a cross linking agent source or reagent, and an oxygen containing source, among others.

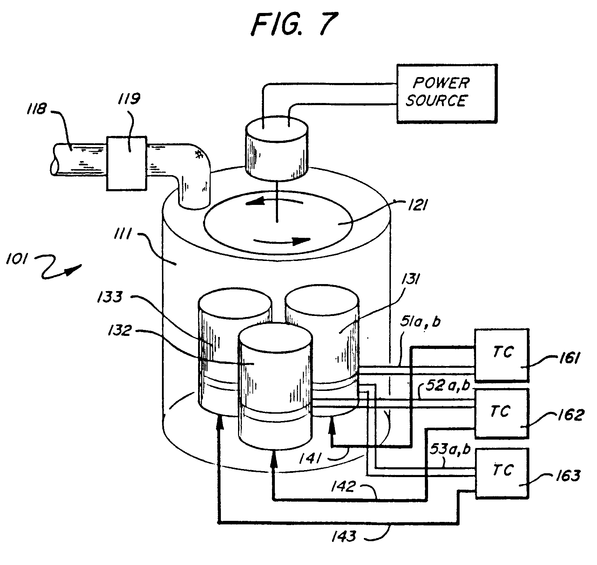

A vacuum deposition useful for the invention is shown in Figure 7. The system 101 includes a vacuum vessel 111. Within the vessel are three crucibles, furnaces, or "boats," e.g., substantially inert, ceramic crucibles 131, 132, and 133, heated by heating elements 141, 142, 143. The heating elements are individually controlled by controller and power supply 161, 162, 163. One vessel, 131, contains a substantially non-convecting, multi-component, solid, chalcogenide, first source. One vessel 132 may contain a chalcogen second source, e.g. tellurium. The third vessel 133 when present, may contain an oxygen containing source. The vessel 111 is pumped down by vacuum pump 119 through vacuum line 118.

In carrying out this method, all three sources, including the first source, i.e., the substantially non-convecting, multi-component, chalcogenide containing source, are converted to a non-condensed state, e.g., a gas, having substantial condensed state/non-condensed state equivalence. The source is substantially single phase, and may be a solid or a liquid. The source material is then deposited on a substrate as substrate 121 or a superjacent layer thereon to form a deposit having substantial non-condensed state/deposit equivalence, and the substantial absence of vertical concentration gradients. The source is congruently sublimating or congruently evaporating. That is, it has substantial condensed state/non-condensed state compositional equivalence.

In carrying out the method, the substrate 121 is rotated. The rotation is at high speed. This provides uniformity in the coating.

Most commonly, the first source contains cross linking agents, e.g., germanium, and or tin, optionally with lead and the chalcogen, e.g., tellurium. In order to attain congruent sublimation i.e., condensed state/non-condensed state compositional equivalence, the components are present as tellurides, e.g., germanium telluride and tin telluride. The telluride may be present as a mixed telluride $(Ge_x Sn_{1-x})Te$ where x is from 0 to 1.0. The tellurium is about 50 atomic percent of the first source material whereby to provide solid/non-condensed state equivalence.

The second source may be, for example, tellurium or tellurium oxide, germanium, or germanium oxide.

When present to form an oxide-type layer, the oxygen containing third source, i.e., the material in crucible 127, may be a solid, as germanium oxide, tellurium oxide, tin oxide, and mixtures thereof. When the third source is germanium oxide, it may be an equimolar mixture of relatively low vapor pressure Ge and $GeO_2$ particles in a high state of subdivision, e.g., less than 0.02 mm. At temperatures of 600°C to 800°C, this results in the formation of relatively high vapor pressure GeO. Alternatively, the oxygen containing source may be a gaseous source as $O_2$ or $NO_2$.

The layer of memory material 15 is formed by depositing the state change material according to the methods of the instant invention.

The reagents, e.g., the telluride, the tellurium, and, when present, the oxide, are converted to a non-condensed state by heating to evaporation, including sublimation. For example, in Figure 7, resistance heaters 141, 142, 143 are shown to heat the individual crucibles 121, 122, 123.

The resulting deposit of phase changeable material is a thin film, e.g., on the order of 5 nm to 200 nm thick.

The problems of optical data storage devices may be obviated by providing a switching modulator in the memory medium. The switching modulator is a transition metal, optionally with a halogen. The preferred switching modulators are the transition metals of the right hand column of Group VIII, Ni, Pd, and Pt. The halogen, when present, may be F, Cl, Br, or I, with Br and I preferred.

The cross linking agents are elements of Groups IIIB, IVB, and VB, of the periodic chart.

Exemplary cross linking agents from Groups IIIB, IVB, and Vb, include Al, In, and Ga from Group IIIB, Si, Ge, and Sn from Group IVB, N, P, As, Sb, and Bi from Group VB, and mixtures thereof. Most commonly, the cross linking agent is Ge or Sn, with one or more of Sn, As, or Sb.

Additionally, the data storage medium chalcogenide composition may contain one or more additional chalcogenides such as sulfur, selenium, or mixtures thereof as well as further cross linking agents such as tin, arsenic, or antimony and contrast enhancing additives such as gallium, or tin, and the like.

In one preferred exemplification, the data storage medium is substantially free of oxygen, the chalcogenide is tellurium, the cross linking agent is germanium either alone or with additional cross linking agents, e.g., silicon, tin, arsenic, and/or antimony, the switching modulator is nickel, the atomic ratio of cross-linking agent(s) to total composition is from about 1 percent to about 20 percent, the atomic fraction of switching modulator is from 1 to 20 percent and preferably from 1 to 10 percent. Additionally, the data storage medium may further contain contrast enhancing additives, such as tin with a ratio of contrast enhancing additive to total composition of from about 2 percent to about 10 percent.

The amounts of switching modulator and cross linking agent individually, and the total amounts of switching modulator and cross linking agent are relatively critical for (1) enhancing the crystallization rate, (2) obtaining an optimum "erase" signal to noise ratio invariance with respect to "written" storage time and random crystallite orientation, (3) obtaining an optimum contrast ratio with respect to cycle history, (4) achieving crystallite growth suppression in the written state, and (5) enhancing discrimination between "erased" and "written" states.

According to this exemplification of the invention herein contemplated, the atomic fraction of switching modulator should be high enough to obtain a high density of nucleation sites, i.e. above about 0.1 atomic percent and preferably above 2 atomic percent. This controls grain size and provides random crystallite orientation in the erased state. However, the concentration of switching modulator should be below about 20 atomic percent and preferably below about 10 atomic percent to permit discrimination between detectable states. The effect of switching modulator above an effective threshold is evidenced by an increase in crystallization velocity and by one or more of (a) a reduction in "erased" signal to noise ratio as a function of "written" storage time, (b) a decrease in grain size as determined by Raman spectroscopy, and/or (c) a decrease in the preferred orientation of the grains, as evidenced by x-ray diffraction.

We have found that both (1) written state storage stability and (2) randomness of subsequent erased state chalcogenide crystallization are harmfully effected by oxygen content. The comparative effects of oxygen and nickel switching modulator on (1) written state storage stability and (2) randomness of subsequent erased state chalcogenide crystallization, are shown in Figures 2A and 2B.

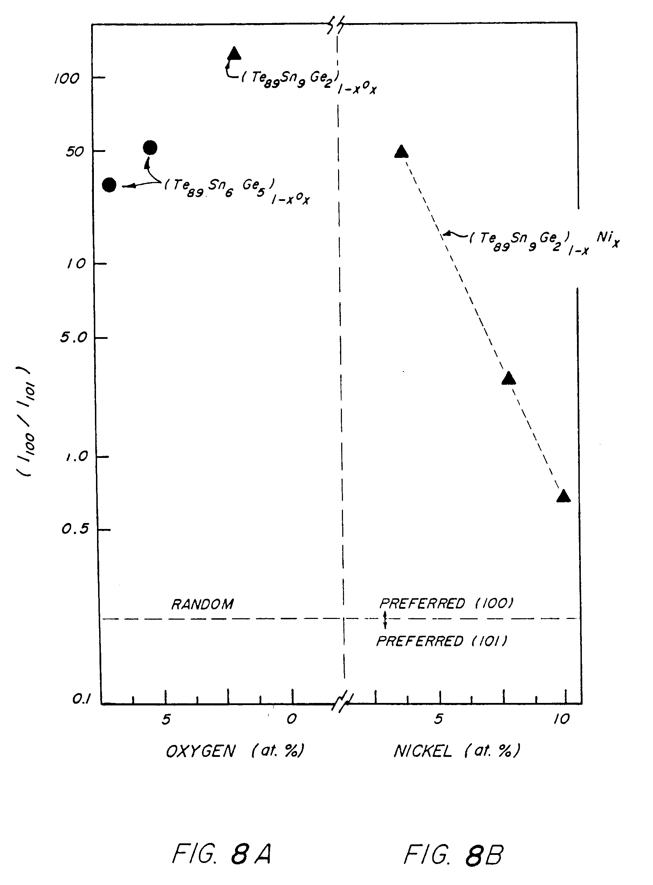

In Figure 8A and 8B, the logarithm of the ratio of (1) the intensity of 100 oriented "erased" chalcogenide crystallites to (2) the intensity of the 101 oriented "erased" chalcogenide crystallites determined by x-ray diffraction is plotted as a function of (3) oxygen and/or nickel content, and (4) written state storage time. The change in crystal orientation upon storage is correlated with poor written state storage stability and high erased state signal to noise ratios, while crystallite randomness is correlated with good written state storage stability and low erased state signal to noise ratios. Orientation intensity ratios of 0.1 to 1.0, and especially about 0.2, are preferred.

The nickel containing films were co-sputtered from ($Te_{89}Ge_2Sn_9$) and Ni targets. The oxygen containing samples were reactively sputtered from ($Te_{89}Ge_2Sn_9$) targets in an Ar-He atmosphere. After sputtering, the resulting films were cycled through large area vitrification - crystallization cycles, i.e., "write" - "erase" cycles, for x-ray diffraction studies. Vitrification, i.e., recording, was by a 30-40 milliwatt, 35 nanosecond laser pulse over a 1 cm by 1 cm area. Crystallization, i.e., erasing, was by a 0.5 Joule, $cm^2$, 50 microsecond pulse from a xe flash tube, over a 1 cm by 1 cm area. X-ray diffraction studies were done after crystallization, i.e., "erasing".

The ($Te_{89}Ge_2Sn_9$)$_{1-x}O_x$ samples, where x is from 0 to 0.20, shown in Figures 2A, exhibit increasing chalcogenide crystallite orientation with increasing oxygen content, and increasing chalcogenide crystallite orientation with increasing written state storage time.

The ($Te_{89}Ge_2Sn_9$)$_{1-x}Ni_x$ samples, shown in Figure 2B, exhibit decreasing chalcogenide crystallite orientation with increasing Ni, and independence of chalcogenide crystallite orientation with respect to written state storage time. Nickel decreased chalcogenide crystallite orientations, that is, nickel increased randomness of the chalcogenide crystallites upon erasure.

11

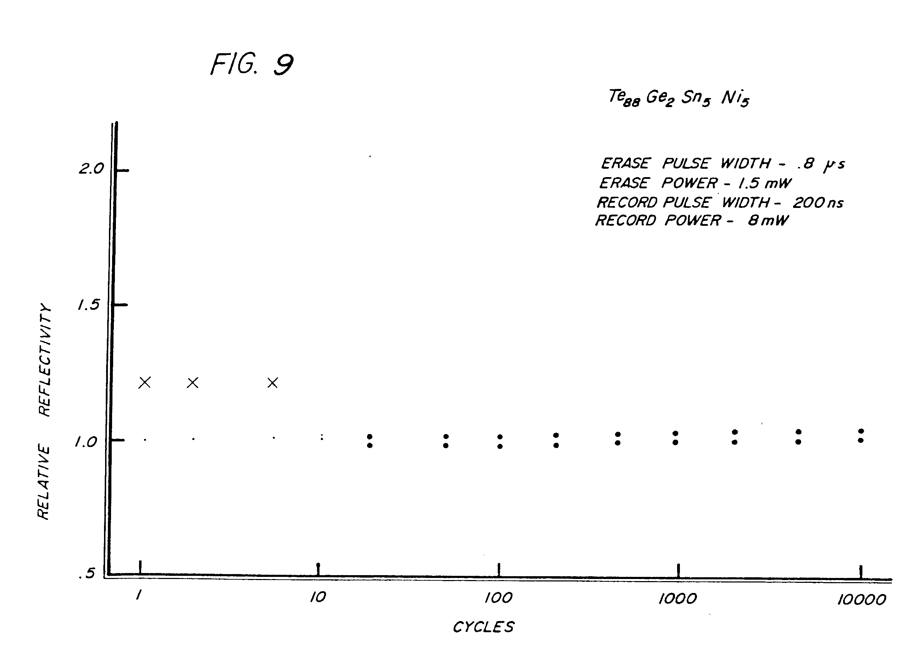

Figures 9, 10 and 11 are plots of the written and erased state relative reflectivities and switching times versus number of cycles at various Ni concentration for co-sputtered $Te_{89}Ge_2Sn_9$ targets onto a 1 cm by 1 cm by 11 mil glass substrate 8in an argon atmosphere. The $Te_{89}Ge_2Sn_9$ samples were sputtered onto the targets in an argon atmosphere.

The samples were then tested in a state tester where a 1 micron by 1 micron cell was cycled repeatedly.

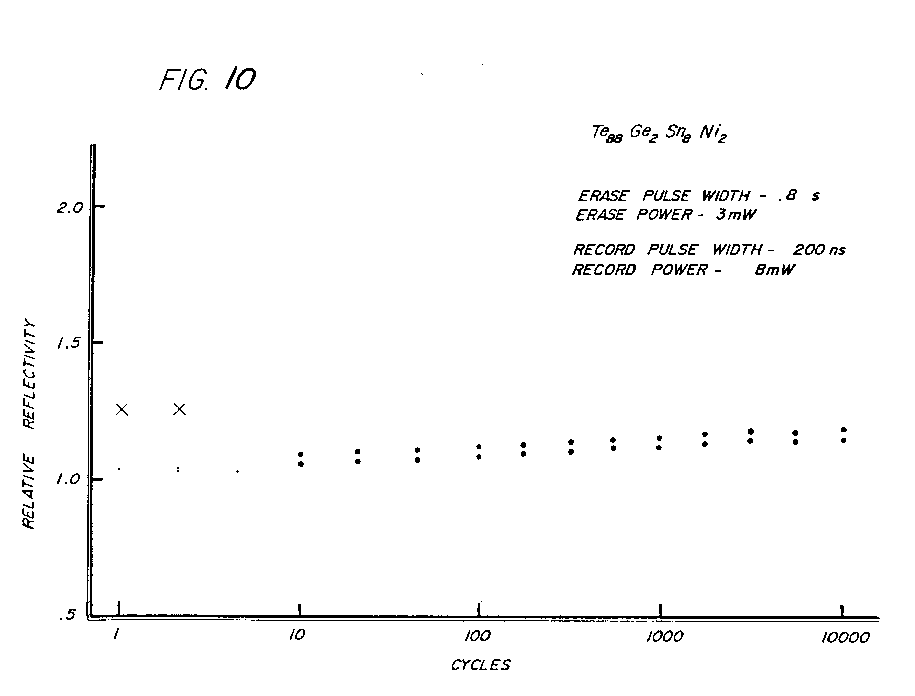

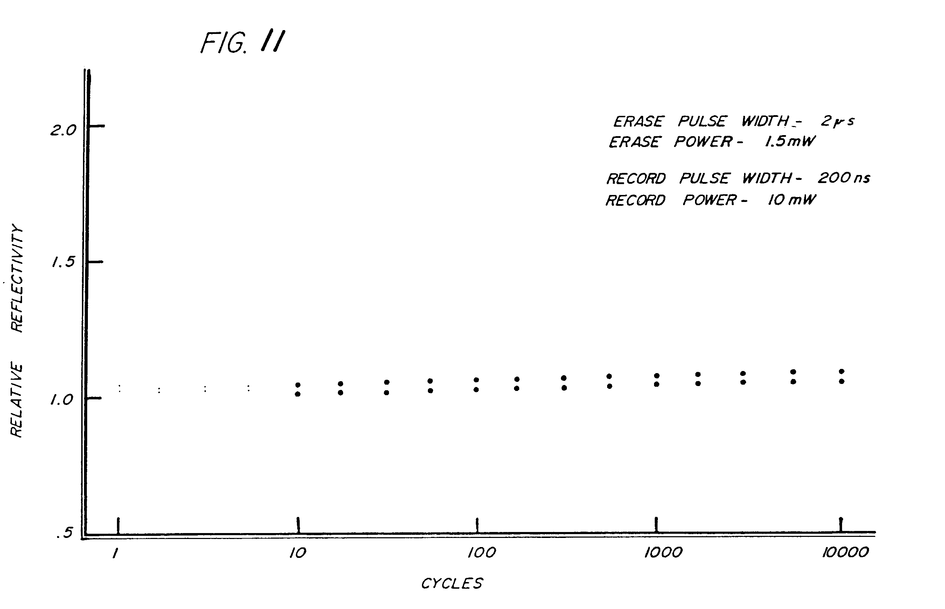

Figure 9 shows the relative reflectivities for the written and erased states of a $Te_{89}Sn_9Ge_2$ cell over 10,000 cycles. Erasing was with a 2 microsecond, 1.5 milliwatt pulse, and writing was with a 200 nanosecond, 10 milliwatt pulse. Figure 10 shows the relative reflectivities for the written and erased plates of a $Te_{88}Ge_2Sn_8Ni_2$ cell over 10,000 cycles. Erasing was with a 0.8 microsecond, 3 milliwatt pulse, and writing was with a 200 nanosecond, 8 milliwatt pulse. Figure 11 shows the relative reflectivities for the written and erased states of a $Te_{88}Ge_2Sn_5Ni_5$ cell over 10,k000 cycles. Erasing was with a 0.8 nanosecond, 1.5 milliwatt pulse, and writing was with a 200 nanosecond, 8 milliwatt pulse.

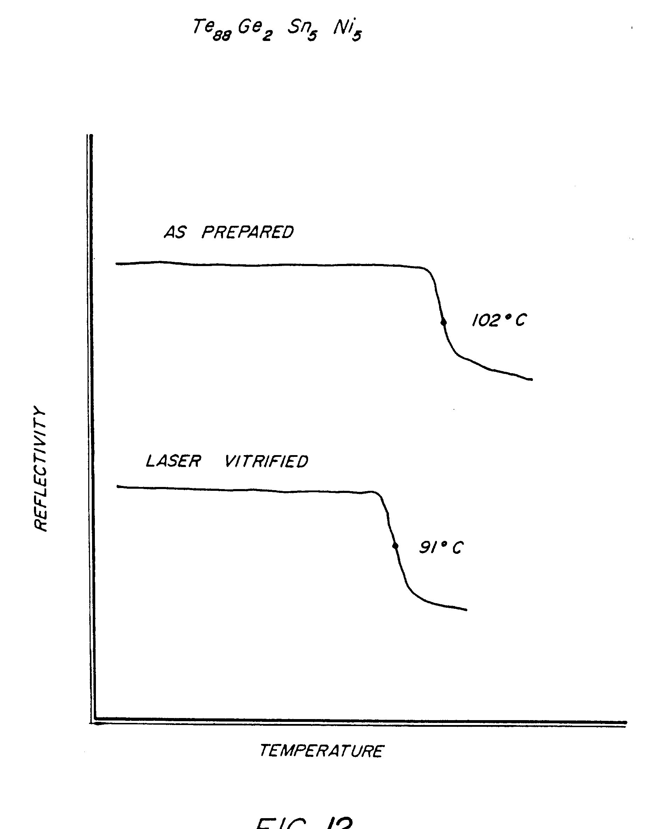

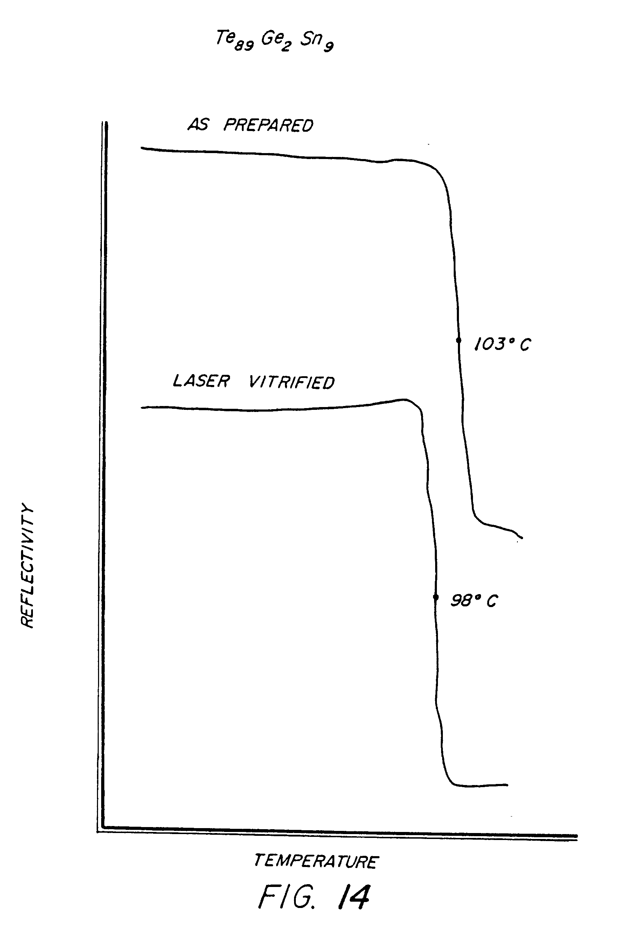

Figures 12, 13 and 14 show the reflectivity versus temperature for sputtered Te-Ge-Sn films, with and without Ni, before and after laser vitrification. The discontinuity represents the crystallization temperature. The films were prepared by co-sputtering Te-Ge-Sn and Ni in an argon atmosphere. The reflectivity versus temperature curve for the first crystallization is shown as the "As Prepared" curve. Vitrification was carried out with a series of "write" and "erase" cycles until constant valves of written and erased reflectivity were obtained. The reflectivity versus temperature curve, after constant reflectivity values were obtained, is shown as the "Laser Vitrified" curve.

Figure 12 shows a 103°C crystallization temperature for $Te_{89}Ge_2Sn_9$ as deposited, and a 98°C crystallization temperature as vitrified. This is a five degree difference. Figure 7 shows a 110°C crystallization temperature as vitrified. This is an eleven degree difference. Figure 8 shows a 102°C crystallization temperature for $Te_{88}Ge_2Sn_8Ni_5$ as deposited, and a 91°C crystallization temperature as vitrified. This is also an eleven degree difference.

The elimination of oxygen, and the use of the contemplated switching modulator, e.g., a transition metal and/or a halogen, as nickel , platinum, palladium, bromine, iodine, or mixtures thereof, is associated with greatly enhanced written state (disordered) storage time for the erased state (crystalline) signal to noise ratio, and in a preferred exemplification, a substantially written state storage time invariant erase state signal to noise ratio.

Exemplary data storage medium formulations include, by way of example and not limitation, TeGeSnNi, TeSiSnNi, TeGeAlNi , TeGeNi, TeSeINi, and TeGeMoNi among others.

According to one exemplification, the materials are deposited or co-deposited, e.g. by evaporation, co-evaporation, reactive sputtering, or reactive co-sputtering, to form a substantially uniform deposit thereof. Evaporation includes electron beam evaporation and thermal evaporation. The resulting coating is about 50 to 150 nm or more thick, the exact thickness being experimentally determined to optimize contrast at the laser wavelengths of interest.

Encapsulation may be carried out under vacuum. In this way the data storage medium is not contacted with atmospheric oxygen.

Formation, i.e., stabilized phase separation, may be carried out either inside or outside the deposition chamber, or after deposition of the film, or after deposition of each layer of insulation, anti-ablation, and protective layers. In addition to the phase separation, formation also provides the advantage of release of the trapped argon in the film if the film is made by argon sputtering.

As herein contemplated the dielectric layer 21 is graded or layered, e.g., in oxygen content to provide chemical inertness and stability in contact with the optical data storage medium layer 31 and moisture impermability and water insolubility remote therefrom. In the case of germanium oxide, this is a compositional gradient of $GeO_2$ at the interface with the chalcogenide, and $GeO_x$, where x is from about 1.5 to about 1.95, remote from the active layer 31 and in contact with the plastic layers 13, 49.

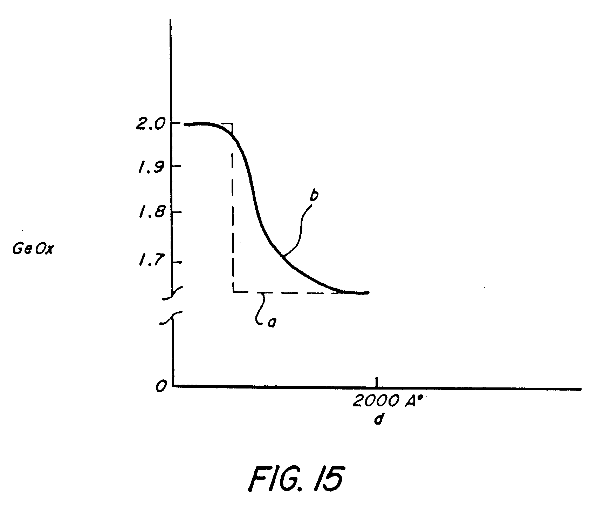

The germanium oxide film has a composition gradient, e.g., as shown in Figure 15. In Figure 15 the stoicheiometry of a film of approximately 200 nm thickness having the stoicheiometry $GeO_x$ is shown. The stoicheiometry parameter, x, is plotted against distance d. The stoicheiometry adjacent to the chalcogenide is substantially stoicheiometry $GeO_2$ and thereafter the stoicheiometry may be graded by a step function, e.g. layering, as in "a" or a smooth function, as in "b", from about x = 2.00 at one boundary to x = 1.50 to 1.95 at the other boundary.

Other dielectrics may provide the encapsulating layers 21, 41. Four example, the encapsulating layers may be silicon nitride, layered or graded to avoid diffusion of silicon into the chalcogenide layer 31. Alternatively, the encapsulating dielectric layers 21, 41 may be silica, alumina, or other dielectric. The dielectric barrier layer 21, for example, of germanium oxide, is from about 50 to about 200 nm thick. The dielectric barrier layer 21 has one or more functions. It serves to prevent oxidizing agents from getting to the chalcogen active layer 31 and prevents the plastic substrate from deforming due to local heating of the chalcogenide layer 31, e.g., during recording or erasing. The barrier layer 21 also serves as an anti-reflective coating, increasing the optical sensitivity of the chalcogenide active layer 31.

When the morphology enhancing component is a substantially permanent component to enhance ordering, the component is formed of tungsten, molybdenum, iron, cobalt, nickel , platinum, titanium, zirconium, hafnium, niobium, tantalum, high melting compounds thereof, including chalcogenides thereof, or mixtures thereof.

When the morphology enhancing component is required to persist for only one cycle, helping manufacture, eliminating the need for aging, and helping initialization, the morphology enhancing component can be a chalcogen. It may also contain other alloying agents and even oxygen. For example a $Te_{59}Sn_6Ge_5O_{30}$ film may be deposited atop a $Te_{79}Sn_6Ge_5O_{10}$ phase change film. The chalcogen oxide film eliminates the need for aging the underlying phase change film prior to depositing barrier layer film.

The following examples are illustrative of the method and apparatus of the invention.

EXAMPLES

Example I

A series of tests were conducted to determine the relative effects of oxygen and nickel on (1) erased chalcogenide crystallite orientation, and (2) written state storage time.

For each test targets of ($Te_{89}Ge_2Sn_9$) and Ni were utilized. For the Ni containing samples. The targets were co-sputtered onto a 1 inch by 1 inch by 11 mil glass substrate. For the oxygen containing samples the $Te_{89}Ge_2Sn_9$ was reactively sputtered in an oxygen-argon atmosphere onto a 1 inch by 1 inch by 11 mil glass substrate. Sputtering was carried out in an R.D. Mathis sputtering module that was 3.75 inches from the sputtering target. The sputtering module had an SG-1250 power supply with a 13.56 megahertz operating frequency through two radio frequency electrodes.

The sputtering module was taken down to $10^{-6}$ atmosphere and then pressurized to 3-5 millitorr with argon or argon and oxygen. Sputtering was then carried out for 15 minutes at a bias of 800 volts and an r.f. target power density of 0.5 watts/cm$^2$. Sputtering from the ($Te_{84}Ge_2Sn_9$) and Ni targets was carried out in an argon atmosphere. Reactive sputtering from the ($Te_{89}Ge_2Sn_9$) target was carried out in an argon atmosphere containing 0.5 atomic percent oxygen.

The samples were then subjected to a forming process, in which the films were melted once by an excimer laser. This was done at a pulse duration of 35 nanoseconds and an energy density of 30-40 millijoules per square centimeter.

The samples were then subjected to a crystallization-vitrification (erase-write) life test over 1 cm x 1 cm diameter cells. For these cycle tests, an excimer laser was used for vitrification (writing). The laser pulse was 30-40 millijoules/cm$^2$, for 35 nanoseconds.

After each "write" pulse, the samples were stored for 15-20 hours, and then "erased" by a xenon flash lamp. The flash lamp has an energy density of 0.5 Joule/cm$^2$ and a 50 microsecond flash duration. The "erased" samples were then examined by x-ray diffraction to determine the crystallite orientation.

The results shown in Tables I and II below, and in Figures 2A and 2B were obtained. The results show increasing isotropic crystallite orientation with increasing nickel.

13

## Table I

Ratio of Intensity of [100] Chalcogenide Crystallites to
Intensity of [101] Chalcogenide Crystallites in
$(Te_{89}Ge_5Sn_6)_{1-x}O_x$

| X | I [100] | I [101] | I[100]/I[101] |
|---|---------|---------|---------------|
| 3 | 1 | 0.03 | 33.3 |
| 7 | 1 | 0.02 | 50 |
| 10 | 1 | --- | infinite |

## Table II

Ratio of Intensity of [100] Chalcogenide Crystallites to
Intensity of [101] Chalcogenide Crystallites in
$(Te_{89}Ge_2Sn_9)_{1-x}Ni_x$

| X | I [100] | I [101] | I[100]/I[101] |
|---|---------|---------|---------------|
| 2 | 1 | 0.32 | 3.12 |
| 5 | 1 | 0.29 | 3.44 |
| 8 | 0.81 | 1 | 0.81 |

Example II

A series of tests were carried out to determine the "written" and "erased" relative reflectivities for sputtered $Te_{88}Ge_2Sn_8Ni_2$, $Te_{88}Ge_2Sn_5Ni_5$ and $Te_{89}Ge_2Sn_9$ films.

The nickel containing samples were prepared by co-sputtering from Ni and $Te_{89}Ge_2Sn_9$ targets onto a 1 cm by 1 cm by 11 mil glass substrate in an argon atmosphere. The $Te_{89}Ge_2Sn_9$ samples were sputtered onto the targets in an argon atmosphere.

The samples were then tested in a state tester where a 1 micron by 1 micron cell was cycled repeatedly. A diode laser was used to cycle the cell with a 0.8 to 2.0 microsecond, 1.5 to 3.0 milliwatt erase pulse, and a 200 nanosecond, 8-10 milliwatt write pulse. The samples with nickel were erased with a 0.8 microsecond erase pulse. The sample without nickel required a 2.0 microsecond erase pulse.

Figure 8 shows the relative reflectivities for the written and erased states of a $Te_{89}Sn_9Ge_2$ cell over 10,000 cycles. Erasing was with a 2 microsecond, 1.5 milliwatt pulse. Figure 9 shows the relative reflectivities for the written and erased states of a $Te_{88}Ge_2Sn_8Ni_2$ cell over 10,000 cycles. Erasing was with a 0.8 microsecond, 3 milliwatt pulse, and writing was with a 200 nanosecond, 8 milliwatt pulse. Figure 10 shows the relative reflectivities for the written and erased states of a $Te_{88}Ge_2Ni_5$ cell over 10,000 cycles. Erasing was with a 0.8 nanosecond, 1.5 milliwatt pulse, and writing was with a 200 nanosecond, 8 milliwatt pulse.

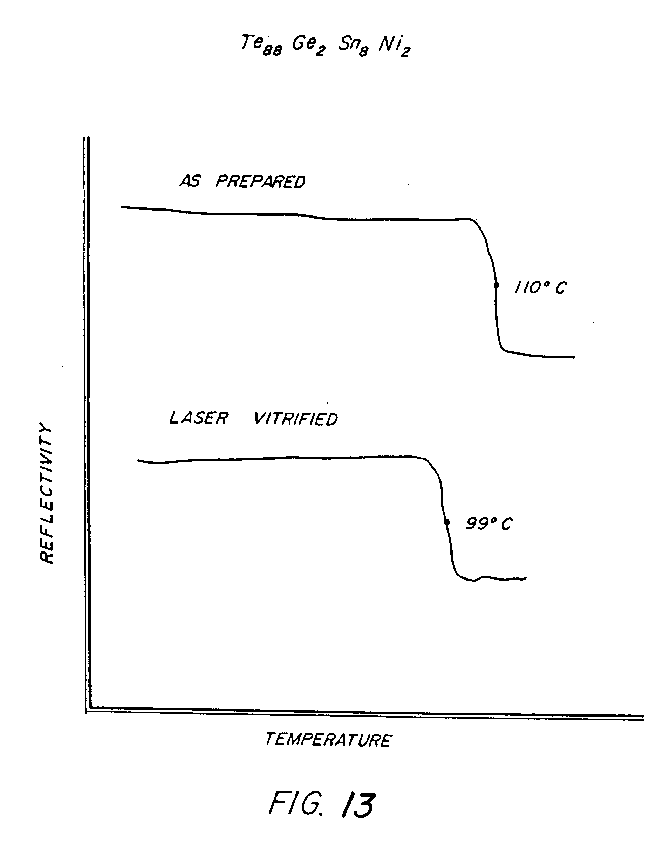

Figure 11 shows a 103°c crystallization temperature for $Te_{89}Ge_2Sn_9$ as deposited, and a 98°c crystallization temperature as vitrified. This is a five degree difference. Figure 7 shows a 110°c crystallization temperature for $Te_{88}Ge_2Sn_8Ni_2$ as deposited, and a 99°c crystallization temperature as vitrified. This is an eleven degree difference. Figure 13 shows a 102°c crystallization temperature for $Te_{88}Ge_2Sn_8Ni_5$ as deposited, and a 91°c crystallization temperature as vitrified. This is also an eleven degree difference.

Example III

A series of tests were carried out to determine the cycle life and erase time for $Te_{88}Ge_2Sn_8Ni_2$, $Te_{88}Ge_2Sn_5Ni_5$ and $Te_{89}Ge_2Sn_9$. The samples were prepared as described in Example I, and tested as described in Example II. The results shown below were obtained. The results of M. Chen, V.A. Rubin, V. Marrello, U.G. Gerber, and V.B. Jipson, "Reversibility an Stability of Tellurium Alloys for Optical Data storage Applications", Appl. Phys. Lett. Vol. 46(8), pages 734-736 (April 15, 1985), incorporated herein by reference, are shown for comparison:

| Sample | Phase | Cycles | Erase Time u-sec | $T_x$ (DegC) Rcrded | $T_x$ (De( Dps· |
|---|---|---|---|---|---|
| $Te_{29}Ge_2Sn_9$ (unencapsulated) | Amorphous | $5 \times 10^5$ | 2.0 | 98 | 103 |
| $Te_{88}Ge_2Sn_8Ni_2$ (unencapsulated) | Amorphous | $5 \times 10^5$ | 0.8 | 99 | 110 |
| $Te_{88}Ge_2Sn_5Ml_5$ (unencapsulated) | Amorphous | $5 \times 10^5$ | 0.8 | 91 | 102 |
| $Te_{87}Ge_8Sn_5$ (encapsulated) (M.Chen et al) | Amorphous | 10 | 30 | 73 | 105 |

While the invention has been described with respect to certain preferred exemplifications and embodiments thereof it is not intended to be bound thereby but solely by the claims appended hereto.

**Claims**

1. A data storage device (1) having a chalcogenide data storage medium (31) including a cross-linking agent, a substrate (11) supporting the data storage medium (31), and a dielectric layer (21, 41) encapsulating the chalcogenide data storage medium (31) to provide a moisture barrier which prevents the diffusion of water into the chalcogenide, the chalcogenide data storage medium (31) being reversibly switchable between detectable states by the application of projected beam energy thereto, said data storage medium (31) characterized by:
   a reversibly switchable chalcogenide including about 1 to 20 atomic percent of a switching modulator to make the erased signal to noise ratio substantially invariant with respect to written storage time, and to make the contrast ratio substantially invariant with respect to cycle history, said switching modulator being a transition metal and/or a halogen.

**2.** The data storage device of Claim 1, where the dielectric (21, 41) is compositionally graded in oxygen content with respect to distance from the chalcogenide data storage medium (31), being substantially stoichiometric oxide in proximity to the chalcogenide data storage medium (31) and being a substantially non-stoichiometric suboxide remote from the chalcogenide data storage medium.

**3.** The data storage device of Claim 2 wherein the dielectric is substantially continuously compositionally graded in oxygen content.

**4.** The data storage device of Claim 2 wherein the dielectric is layered in oxygen content.

**5.** The data storage device of Claim 2 wherein the dielectric is germanium oxide.

**6.** The data storage device of Claim 5 wherein the germanium oxide is substantially $GeO_2$ in proximity to the chalcogenide data storage medium and the germanium oxide has the stoichiometry $GeO_x$, where x is from 1.5 to 1.95 remote from the chalcogenide data storage medium.

**7.** The data storage device of Claim 1 where a morphology enhancing component comprises a high melting point metal in contact with the chalcogenide layer, to reduce the ordering switching time of the chalcogenide layer.

**8.** The data storage device of Claim 7 wherein the high melting point metal is chosen from the group consisting of zirconium, titanium, hafnium, niobium, tungsten, molybdenum, iron, cobalt, nickel, platinum, and mixtures thereof.

**9.** The data storage device of Claim 8 wherein the morphology enhancing component promotes epitaxial growth of an ordered chalcogen in the state changeable chalcogenide layer.

**10.** The data storage device of Claim 8 wherein the material comprising the morphology enhancing component has planes with trigonal or hexagonal symmetry.

**11.** The data storage device of Claim 10 wherein the chalcogenide crystallizes substantially perpendicularly to the morphology enhancing component.

**12.** The data storage device of Claim 8 wherein the morphology enhancing component and the chalcogenide layer are substantially non-reactive with and insoluble in each other.

**13.** The data storage device of Claim 8 wherein the morphology enhancing component is a layer from about 10 to about 100 Angstroms thick.

**14.** The data storage device of Claim 8 wherein the morphology enhancing component comprises morphology enhancing material embedded in the state changeable chalcogenide layer.

**15.** The data storage device of Claim 8 wherein the morphology enhancing component comprises a layer of chalcogen deposited in contact with the layer of state changeable chalcogenide.

**16.** The data storage device of Claim 15 wherein the chalcogen of the morphology enhancing component and the chalcogen of the state changeable chalcogenide layer comprise the same chalcogen.

**17.** The data storage device of Claim 16 wherein the morphology enhancing component comprises a layer from about 10 to about 1000 Angstroms thick.

**18.** The data storage device of Claim 17 wherein the chalcogenide is tellurium.

**19.** The data storage device of Claim 1 wherein the switching modulator is Ni.

**20.** The date storage device of Claim 1 wherein the data storage medium is substantially free of oxygen.

EP 0 205 039 B1

**Patentansprüche**

1. Datenspeichervorrichtung (1), die ein Chalkogenid-Datenspeichermedium (31) mit einem Vernetzungsmittel, ein das Datenspeichermedium (31) tragendes Substrat (11) und eine dielektrische Schicht (21, 41) hat, die das Chalkogenid-Datenspeichermedium (31) umkapselt, um eine Feuchtigkeitsbarriere zu bilden, die das Diffundieren von Wasser in das Chalkogenid verhindert, wobei das Chalkogenid-Datenspeichermedium (31) durch das Aufbringen von projizierter Strahlenergie darauf reversibel zwischen detektierbaren Zuständen umschaltbar ist, wobei das Datenspeichermedium (31) gekennzeichnet ist durch:

   ein reversibel umschaltbares Chalkogenid, das 1-20 Atom-% eines Schaltmodulators aufweist, um das Löschsignal-Rausch-Verhältnis in bezug auf die Schreibspeicherzeit im wesentlichen invariant zu machen und um das Kontrastverhältnis in bezug auf den Zyklusverlauf im wesentlichen invariant zu machen, wobei der Schaltmodulator ein Übergangsmetall und/oder ein Halogen ist.

2. Datenspeichervorrichtung nach Anspruch 1, wobei das Dielektrikum (21, 41) zusammensetzungsmäßig in seinem Sauerstoffgehalt abgestuft ist in bezug auf die Entfernung von dem Chalkogenid-Datenspeichermedium (31) und nahe dem Chalkogenid-Datenspeichermedium (31) im wesentlichen stöchiometrisches Oxid ist und fern von dem Chalkogenid-Datenspeichermedium ein im wesentlichen nichtstöchiometrisches Suboxid ist.

3. Datenspeichervorrichtung nach Anspruch 2, wobei das Dielektrikum in seinem Sauerstoffgehalt im wesentlichen kontinuierlich zusammensetzungsmäßig abgestuft ist.

4. Datenspeichervorrichtung nach Anspruch 2, wobei das Dielektrikum in seinem Sauerstoffgehalt geschichtet ist.

5. Datenspeichervorrichtung nach Anspruch 2, wobei das Dielektrikum Germaniumoxid ist.

6. Datenspeichervorrichtung nach Anspruch 5, wobei das Germaniumoxid im wesentlichen $GeO_2$ nahe dem Chalkogenid-Datenspeichermedium ist und das Germaniumoxid die Stöchiometrie $GeO_X$ fern von dem Chalkogenid-Datenspeichermedium hat, mit x = 1,5 bis 1,95.

7. Datenspeichervorrichtung nach Anspruch 1, wobei eine Morphologie-verbessernde Komponente ein hochschmelzendes Metall in Kontakt mit der Chalkogenidschicht aufweist, um die ordnende Schaltzeit der Chalkogenidschicht zu verkürzen.

8. Datenspeichervorrichtung nach Anspruch 7, wobei das hochschmelzende Metall gewählt ist aus der Gruppe, die aus Zircon, Titan, Hafnium, Niob, Wolfram, Molybdän, Eisen, Cobalt, Nickel, Platin und Gemischen davon besteht.

9. Datenspeichervorrichtung nach Anspruch 8, wobei die Morphologie-verbessernde Komponente das epitaxiale Wachstum eines geordneten Chalkogens in der zustandsänderbaren Chalkogenidschicht fördert.

10. Datenspeichervorrichtung nach Anspruch 8, wobei das die Morphologie verbessernde Komponente aufweisende Material Ebenen mit trigonaler oder hexagonaler Symmetrie hat.

11. Datenspeichervorrichtung nach Anspruch 10, wobei das Chalkogenid im wesentlichen senkrecht zu der Morphologie-verbessernden Komponente kristallisiert.

12. Datenspeichervorrichtung nach Anspruch 8, wobei die Morphologie-verbessernde Komponente und die Chalkogenidschicht im wesentlichen nichtreaktiv miteinander sind und ineinander unlöslich sind.

13. Datenspeichervorrichtung nach Anspruch 8, wobei die Morphologie-verbessernde Komponente eine Schicht einer Dicke von ca. 10 bis ca. 100 Å ist.

14. Datenspeichervorrichtung nach Anspruch 8, wobei die Morphologie-verbessernde Komponente Morphologie-verbesserndes Material aufweist, das in die zustandsänderbare Chalkogenidschicht eingebettet ist.

17

**15.** Datenspeichervorrichtung nach Anspruch 8, wobei die Morphologie-verbessernde Komponente eine Schicht von Chalkogen aufweist, die in Kontakt mit der Schicht von zustandsänderbarem Chalkogenid aufgebracht ist.

**16.** Datenspeichervorrichtung nach Anspruch 15, wobei das Chalkogen der Morphologie-verbessernden Komponente und das Chalkogen der zustandsänderbaren Chalkogenidschicht das gleiche Chalkogen aufweisen.

**17.** Datenspeichervorrichtung nach Anspruch 16, wobei die Morphologie-verbessernde Komponente eine Schicht einer Dicke von ca. 10 bis ca. 1000 Å aufweist.

**18.** Datenspeichervorrichtung nach Anspruch 17, wobei das Chalkogenid Tellur ist.

**19.** Datenspeichervorrichtung nach Anspruch 1, wobei der Schaltmodulator Ni ist.

**20.** Datenspeichervorrichtung nach Anspruch 1, wobei das Datenspeichermedium im wesentlichen frei von Sauerstoff ist.

**Revendications**

**1.** Dispositif de stockage de données (1) ayant un support de stockage de données du type chalcogénure (31) qui comprend un agent de réticulation, un substrat (11) qui soutient le support de stockage de données (31), et une couche d'un diélectrique (21, 41) qui encapsule le support de stockage de données du type chalcogénure (31), de façon à réaliser une barrière contre l'humidité, qui empêche que de l'eau ne pénètre par diffusion dans le chalcogénure, le support de stockage de données du type chalcogénure (31) pouvant subir une commutation réversible entre des états détectables sous l'application de l'énergie d'un faisceau projeté, ledit support de stockage de données (31) étant caractérisé par un chalcogénure à commutation réversible, comprenant d'environ 1 à 20% en atomes d'un modulateur de commutation, de façon à rendre essentiellement invariant par rapport au temps de stockage après enregistrement le rapport du signal effacé au bruit, et de façon à rendre le contraste essentiellement invariant par rapport à l'historique du cycle, le modulateur de commutation étant un métal de transition et/ou un halogène.

**2.** Dispositif de stockage de données selon la revendication 1, dans lequel le diélectrique (21, 41) présente une composition qui varie progressivement pour ce qui est de la teneur en oxygène, par rapport à la distance au support de stockage de données du type chalcogénure (31), en étant un oxyde essentiellement stoechiométrique au voisinage du support de stockage de données du type chalcogénure (31) et étant un sous-oxyde essentiellement non stoechiométrique à distance du support de stockage de données du type chalcogénure.

**3.** Dispositif de stockage de données selon la revendication 2, dans lequel le diélectrique présente une teneur en oxygène dont la progression est essentiellement continue.

**4.** Dispositif de stockage de données selon la revendication 2, dans lequel la teneur en oxygène du diélectrique est stratifiée.

**5.** Dispositif de stockage de données selon la revendication 2, dans lequel le diélectrique est de l'oxyde de germanium.

**6.** Dispositif de stockage de données selon la revendication 5, dans lequel l'oxyde de germanium est essentiellement du $GeO_2$ au voisinage du support de stockage de données du type chalcogénure, l'oxyde de germanium correspondant à la stoechiométrie de $GeO_x$, x valant de 1,5 à 1,95, à distance du support de stockage de données du type chalcogénure.

**7.** Dispositif de stockage de données selon la revendication 1, dans lequel un composant renforçateur des caractéristiques morphologiques comprend un métal à point de fusion élevée, en contact avec la couche de chalcogénure, pour réduire le temps de commutation de la mise en ordre de la couche de chalcogénure.

**8.** Dispositif de stockage de données selon la revendication 7, dans lequel le métal à point de fusion élevé est choisi parmi l'ensemble comprenant le zirconium, le titane, le hafnium, le niobium, le tungstène, le molybdène, le fer, le cobalt, le nickel, le platine et leurs mélanges.

**9.** Dispositif de stockage de données selon la revendication 8, dans lequel le composant renforçateur des caractéristiques morphologiques favorise la croissance épitaxiale d'un chalcogène ordonné dans une couche de chalcogénure à changement d'état.

**10.** Dispositif de stockage de données selon la revendication 8, dans lequel le matériau comprenant le composant renforçateur des caractéristiques morphologiques possède des plans à symétrie trigonale ou hexagonale.

**11.** Dispositif de stockage de données selon la revendication 10, dans lequel le chalcogénure cristallise d'une manière essentiellement perpendiculaire aux composants renforçateurs des caractéristiques morphologiques.

**12.** Dispositif de stockage de données selon la revendication 8, dans lequel le composant renforçateur des caractéristiques morphologiques et la couche de chalcogénure sont essentiellement non réactifs vis-à-vis de l'autre et insolubles l'un dans l'autre.

**13.** Dispositif de stockage de données selon la revendication 8, dans lequel le composant renforçateur des caractéristiques morphologiques est une couche ayant une épaisseur d'environ 1 à environ 10 nanomètres.

**14.** Dispositif de stockage de données selon la revendication 8, dans lequel le composant renforçateur des caractéristiques morphologiques comprend un matériau renforçateur des caractéristiques morphologiques noyé dans la couche de chalcogénure à changement d'état.

**15.** Dispositif de stockage de données selon la revendication 8, dans lequel le composant renforçateur des caractéristiques morphologiques comprend une couche d'un chalcogène déposée en contact avec la couche du chalcogénure à changement d'état.

**16.** Dispositif de stockage de données selon la revendication 15, dans lequel le chalcogène du composant renforçateur des caractéristiques morphologiques et le chalcogène de la couche de chalcogénure à changement d'état comprennent le même chalcogène.

**17.** Dispositif de stockage de données selon la revendication 16, dans lequel le composant renforçateur des caractéristiques morphologiques comprend une couche ayant une épaisseur d'environ 1 à environ 100 angstroms.

**18.** Dispositif de stockage de données selon la revendication 17, dans lequel le chalcogénure est le tellure.

**19.** Dispositif de stockage de données selon la revendication 1, dans lequel le modulateur de commutation est Ni.

**20.** Dispositif de stockage de données selon la revendication 1, dans lequel le support de stockage de données est essentiellement exempt d'oxygène.

FIG. 1

FIG. 1A

FIG. 2A

FIG. 2B

$\propto$ —AS DEPOSITED

X'TALLIZED

R

1000 A°

830 nm

FIG. 2C

$\propto$ — AS DEPOSITED

X'TALLIZED

R

1100 A°

830 nm

FIG. 3

CONTRAST RATIO

$$\left[ \frac{R_X - R_\alpha}{R_X + R_\alpha} \right]$$

830 nm

900 A°    1000 A°    1100 A°

CHALCOGEN LAYER THICKNESS

FIG. 4

FIG. 5

FIG. 6

## FIG. 7

POWER
SOURCE

118

119

101

111

121

133

132

131

51a,b

52a,b

53a,b

141

142

143

TC — 161

TC — 162

TC — 163

FIG. 8A          FIG. 8B

FIG. 9

$Te_{88} Ge_2 Sn_5 Ni_5$

ERASE PULSE WIDTH - .8 μs
ERASE POWER - 1.5 mW
RECORD PULSE WIDTH - 200 ns
RECORD POWER - 8 mW

RELATIVE REFLECTIVITY

2.0

1.5

1.0

.5

1          10          100          1000          10000

CYCLES

FIG. 10

$Te_{88} \ Ge_2 \ Sn_8 \ Ni_2$

ERASE PULSE WIDTH - .8 s
ERASE POWER - 3mW

RECORD PULSE WIDTH - 200 ns
RECORD POWER - 8mW

EP 0 205 039 B1

FIG. 11

ERASE PULSE WIDTH - 2 μs
ERASE POWER - 1.5mW

RECORD PULSE WIDTH - 200 ns
RECORD POWER - 10 mW

RELATIVE REFLECTIVITY

CYCLES

EP 0 205 039 B1

$Te_{88}\ Ge_2\ Sn_5\ Ni_5$

FIG. 12

FIG. 13

$Te_{89}\ Ge_2\ Sn_9$

FIG. 14

FIG. 15